# EUROPÄISCHE PATENTANMELDUNG

(11) **EP 0 711 013 A1**
(43) Veröffentlichungstag der Anmeldung: **08.05.1996**
(21) Anmeldenummer: 95106430.2
(22) Anmeldetag: 28.04.1995
(51) Int. Cl.: H02G 3/04

(54) **Vorrichtung zum Schutz von in Schaltschränken oder Geräten verlegten Kabeln**

(30) Priorität: 01.11.1994 DE 9418155 U
(71) Anmelder: KRONE Aktiengesellschaft, D-14167 Berlin (DE)
(72) Erfinder: Long, Simon John, Gloucester, Gloucestershire GL4 7TZ (GB)

(57) **Zusammenfassung**

Die Erfindung betrifft eine Vorrichtung zum Schutz von in Schaltschränken, Geräten o.ä. verlegten Kablen.

Um eine Vorrichtung zu schaffen, die ein Unterschreiten eines minimalen Biegeradius an Austritten von Kabelkanälen o.ä. Einrichtungen und dadurch auch eine Beschädugung verhindert, sind an den Austrittsöffnungen (1) von Kabelkanälen (2) Leiteinrichtungen (3) vorhanden , die eine Unterschreitung eines für die Kabel (4) kritischen minimalen Biegeradius verhindern, sich in Austrittsrichtung erweitern und abgerundet ausgebildet sind.

## Beschreibung

Die Erfindung betrifft eine Vorrichtung zum Schutz von in Schaltschränken, Geräten o.ä. verlegten Kabeln.

Es ist üblich, elektrisch leitende Verbindungen mittels Kabel und Steckverbindern herzustellen. Dabei wird die Länge der Kabel in aller Regel minimiert. Dies führt dazu, daß beispielsweise beim Herstellen der Verbindung, also dem Einstecken des Steckverbinders in die Anschlußstelle oder beim Verlegen der Kabel dieses soweit gebogen wird, daß eine Beschädigung der Seele oder der Isolierung auftritt.

Es ist daher Aufgabe der Erfindung, eine Vorrichtung zu schaffen, die ein Unterschreiten eines minimalen Biegeradius an Austritten von Kabelkanälen o. ä. Einrichtungen und dadurch auch eine Beschädigung verhindert.

Erfindungsgemäß wird diese Aufgabe durch die im kennzeichnenden Teil des Anspruchs 1 genannten Merkmale gelöst. Vorteilhafte Ausgestaltungen und Weiterbildungen der Erfindung ergeben sich bei Verwendung der in den untergeordneten Ansprüche enthaltenen Merkmale.

Mit der erfindungsgemäßen Vorrichtung wird mit an Austrittsöffnungen von Kabelkanälen vorhandenen Leiteinrichtungen eine Unterschreitung eines für die Kabel kritischen minimalen Biegeradius verhindert. Dabei ist eine solche Leiteinrichtung sich in Austrittsrichtung erweiternd und abgerundet ausgebildet.

Die Leiteinrichtung sichert in ihrer Gestaltung und ihren Abmaßen, daß eine Biegung, die kleiner als ca. das Vierfache der Kabeldurchmesser ist, verhindert wird.

Dabei kann die Leiteinrichtung zumindest teilweise trichterförmig ausgebildet und in die Austrittsöffnung einsteckbar sein, was zu einer ökonomischen Montage führt. Mit einer entsprechenden Dimensionierung und Gestaltung kann ein form- und/oder kraftschlüssiger Halt gewährleistet werden.

An den trichterförmigen Teil kann sich ein zusätzliches abgerundetes Leitelement anschließen, das einen größeren Bereich absichert und den gesamten kritischen Bereich, in dem Kabel geführt werden, absichert.

Die Vorrichtung kann auch so ausgeführt werden, daß nur der kritische Bereich überstrichen ist und unkritische lokale Bereiche freigelassen werden.

Nachfolgend soll die Erfindung an einem Ausführungsbeispiel beschrieben werden.

Dabei zeigt:
Figur 1 eine herkömmliche Kabelführung und
Figur 2 eine erfindungsgemäße Vorrichtung.

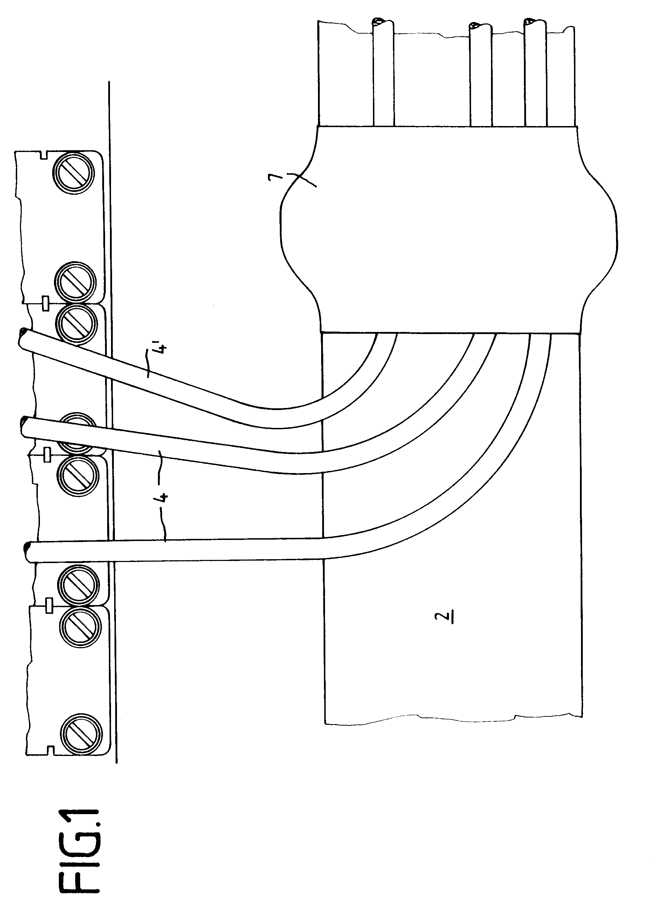

Bei der in Figur 1 dargestellten Kabelführung werden die Kabel 4 mit einer verschiebbaren Kabelführung 7 gehalten und aus einem Kabelkanal 2 zu den nicht dargestellten Anschlußstellen geführt. Bei diesem Beispiel tritt beim Kabel 4' eine Biegung auf, de über das erträgliche Maß hinausgeht und zu Beschädigungen führen kann.

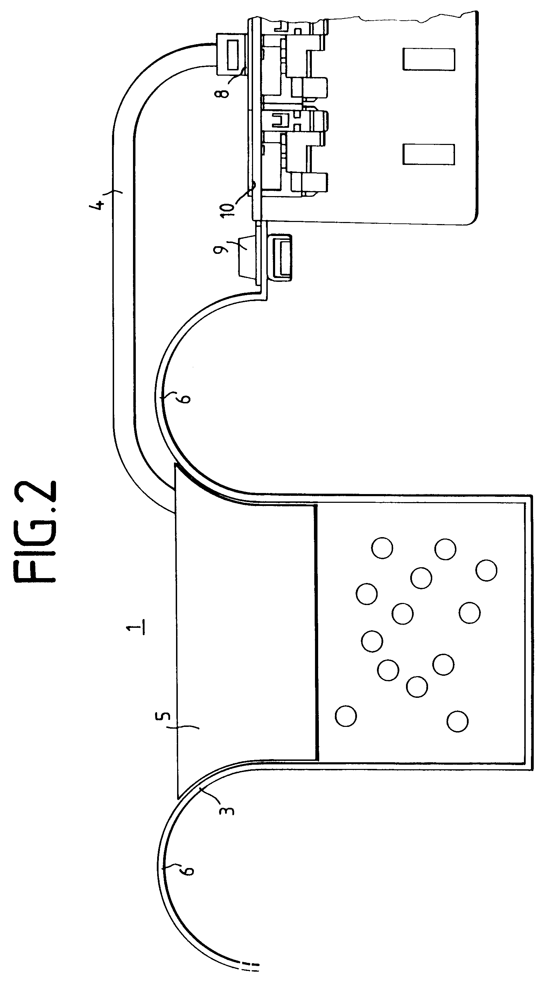

Dagegen ist beim erfindungsgemäßen Beispiel (Fig. 2) an der Austrittsöffnung 1 eine Leiteinrichtung 3 angeordnet, die verhindert, daß der minimale Biegeradius für die Kabel 4 nicht unterschritten wird. Dabei ist direkt im Inneren der Austrittsöffnung 1 ein trichterförmiger Teil 5 vorhanden, der die Austrittsöffnung 1 umgibt vorhanden. An dieses schließt sich ein weiteres ebenfalls abgerundetes Leitelement 6 an, um sämtliche Bereiche abzuschirmen und eine vollständige Sicherung gegen eine Überlastung der Kabel 4 zu erreichen. Am Beispiel des in dieser Darstellung einzigen aus dem Kabelkanal 2 zu einer Anschlußstelle 8 geführten Kabels 4 ist erkennbar, daß eine Unterschreitung des minimalen Biegeradius vollständig verhindert wird. Das abgerundete Leitelement 6 ist bei diesem Beispiel integraler Bestandteil der Austrittsöffnung 1. Er kann aber auch beispielsweise für eventuelle Nachrüstungen ein Extrateil sein, das mit dem Kabelkanal 2 verbindbar ist. Eine Befestigung 9 des Leitelementes 6 am Paneel 10 auf dem die Anschlüsse 8 angeordnet sind, führt zu einer guten Fixierung und auch bei Belastung werden Beschädigungen verhindert, da der Mindestradius immer eingehalten wird.

## Patentansprüche

1. Vorrichtung zum Schutz von in Schaltschränken oder Geräten verlegten Kabeln,
dadurch **gekennzeichnet**,
daß an Austrittsöffnungen (1) von Kabelkanälen (2) Leiteinrichtungen (3) vorhanden sind, die eine Unterschreitung eines für die Kabel (4) kritischen minimalen Biegeradius verhindernd, sich in Austrittsrichtung erweiternd und abgerundet ausgebildet sind.

2. Vorrichtung nach Anspruch 1, dadurch gekennzeichnet, daß die Leiteinrichtung (3) trichterförmig ausgebildet ist.

3. Vorrichtung nach Anspruch 1 oder 2, dadurch gekennzeichnet, daß sich an ein trichterförmiges Teil (5) ein weiteres abgerundetes Leiteelement (6) in Austrittsrichtung anschließt, das das trichterförmige Teil (5) umschließt.

4. Vorrichtung nach Anspruch 1, dadurch gekennzeichnet, daß die Leiteinrichtung (3) den Bereich, in dem Kabel (4) geführt sind, abdeckt.

5. Vorrichtung nach einem der Ansprüche 1 bis 4, dadurch gekennzeichnet, daß die Leiteinrichtung (3) in die Austrittsöffnung einsteckbar ist.
